# EUROPEAN PATENT SPECIFICATION

(11) **EP 1 345 419 B1**
(45) Date of publication and mention of the grant of the patent: **11.11.2009**
(21) Application number: 03014122.0
(22) Date of filing: 08.09.2000
(51) Int. Cl.: H04N 5/21, H04B 7/08, H01Q 9/26, H01Q 21/20

(54) **Multi-element loop antenna**
Mehrelemente-Schleifenantenne
Antenne en boucle à éléments multiples

(30) Priority: 08.09.1999 US 152859 P
(43) Date of publication of application: 17.09.2003
(62) Divisional of application: 00961698.8
(73) Proprietor: Thomson Licensing, 92100 Boulogne-Billancourt (FR)
(72) Inventor: Cranor, Thomas Edward Bruce, Indianapolis, IN 46240 (US); Hall, Edward Allen, Fort Wayne, IN 46814 (US)
(74) Representative: Ruellan-Lemonnier, Brigitte

(56) References cited:
- DE-A- 3 427 629
- US-A- 4 338 606
- US-A- 5 748 032

## Description

The invention generally relates to a loop antenna for receiving a television signal, and more particularly, to a loop antenna used in a system for adaptively reducing multipath distortion in a received television signal.

### BACKGROUND OF THE INVENTION

Terrestrial television broadcast signals have long been plagued by multipath distortion. The transmitted television signal is reflected off of buildings and other large objects causing the reception of undesired multiple signals at the receiver. The undesired signals combine with the transmitted signal and produce what are commonly known as "ghost images" on the television screen. When receiving terrestrial digital broadcast television signals, such as high definition television (HDTV) signals, ghosting can completely prohibit image formation. Multipath distortion is particularly problematic in urban environments where a severe reduction in the amplitude of the received television signal can result due to interference nodes present in the incident fields. A small antenna of the type commonly found in urban environments can be completely enveloped in such a node, resulting in a loss of the television signal altogether. To reduce multipath distortion problems, it has been proposed to use diversity antenna as described in US 5,784,032.

Present techniques for removing multipath distortion in a television signal for both analog and digital television signal reception are based on adaptive equalization within the television receiver. Such techniques are only effective, however, in environments where multipath distortion is not too severe. In severe multipath environments, such as when multipath distortion results in a field node present at the antenna, present equalization techniques are insufficient to correct the distortion.

Therefore, there exists a need in the art for a loop antenna used mainly in a system that reduces multipath distortion in a television signal before the signal is coupled to the television receiver. Loop antennas are known from, for example, US 4,338,606 or DE 34 27 629 71. The invention proposes new type of loop antenna.

### SUMMARY OF THE INVENTION

The invention concerns a loop antenna comprising:
a plurality of conductor elements arranged in combination to form a loop,
wherein each conductor element has two opposite side portions, each side portion located adjacent a corresponding side portion of a neighbouring conductor element to define a gap between said adjacent side portions,
each said gap defining a feed port of said loop antenna, thus providing a plurality of feed ports corresponding to the plurality of conductor elements,
wherein said side portions of each said conductor element, at said gaps, have a narrower cross-section transverse to the perimeter of the loop than the remaining portions of the conductor element;
a plurality of feed lines each associated with a respective one of said plurality of conductor elements and uniquely associated with one of the feed ports at one side portion of the associated conductor element,
characterized in that
each feed line is mechanically coupled to its associated conductor element substantially midway between the feed ports at the side portions of said conductor element,
each feed line extends along its associated conductor element and is terminated at its uniquely associated feed port by first signal coupling means.

### BRIEF DESCRIPTION OF THE DRAWINGS

The teachings of the present invention can be readily understood by considering the following detailed description in conjunction with the accompanying drawings, in which:
FIG. 1 depicts a block diagram of an apparatus wherein is used the present invention;
FIG. 2 depicts a block diagram of one embodiment of an adaptive combiner;
FIG. 3A shows a perspective view of a four-port loop antenna according to the present invention; FIG. 3B shows a top view of a four-port loop antenna;
FIG. 3C shows a detailed side view of a feed port;
FIG 3D shows a detailed top view of a feed port;
FIG 3E shows a detailed top view of a feed port with a transformer;
FIG. 4A illustrates basic and controlled radiation patterns of the present invention for low frequencies;
FIG. 4B illustrates basic and controlled radiation patterns of the present invention for high frequencies; and
FIG 5 illustrates the configuration of a clover antenna design.

To facilitate understanding, identical reference numerals have been used, where possible, to designate identical elements that are common to the figures.

### DETAILED DESCRIPTION

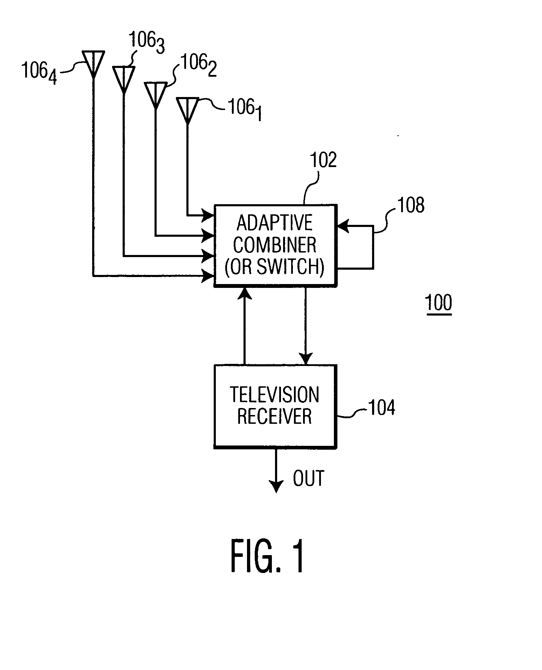

FIG. 1 depicts a block diagram of an apparatus 100 for reducing multipath distortion in a television signal. The apparatus 100 comprises a plurality of antenna elements 106 (e.g., four are shown), an adaptive combiner 102, and a television receiver 104. The antenna elements 106 receive an RF signal corresponding to a desired terrestrially broadcast television channel selected from a plurality of channel locations in a frequency band. The RF signals corresponding with broadcast channels are analog and digital television signals. The analog signal may comprise a conventional National Television Standard Committee (NTSC) modulated signal within the United States. The digital television signal may comprise a Vestigial Sideband (VSB) modulated signal in compliance with the Advanced Television Systems Committee (ATSC) standard A/53, for example, a high definition television (HDTV) signal. The system described herein could also be configured to function with other formats, such as European, by appropriate changes in the input section of the system.

Each antenna element 106 receives a spatially unique replica of the desired television signal (i.e., a replica of the television signal having a unique amplitude and phase associated with the angle of incidence). Each spatially unique replica is coupled to the adaptive combiner 102 for spatial processing. The adaptive combiner 102 generates a weighted summation of the spatially unique replicas that effectively places spatial nulls in the directions of multipath interference. The spatial processing of the adaptive combiner 102 is adaptive in that the (1) weighting information is generated using a figure of merit (FoM) 108 that is a measure of how well the apparatus 100 is operating, or (2) the weights are determined by direct processing of the input signals. The output of the adaptive combiner 102 is coupled to a television receiver 104 for demodulation and display of the television information.

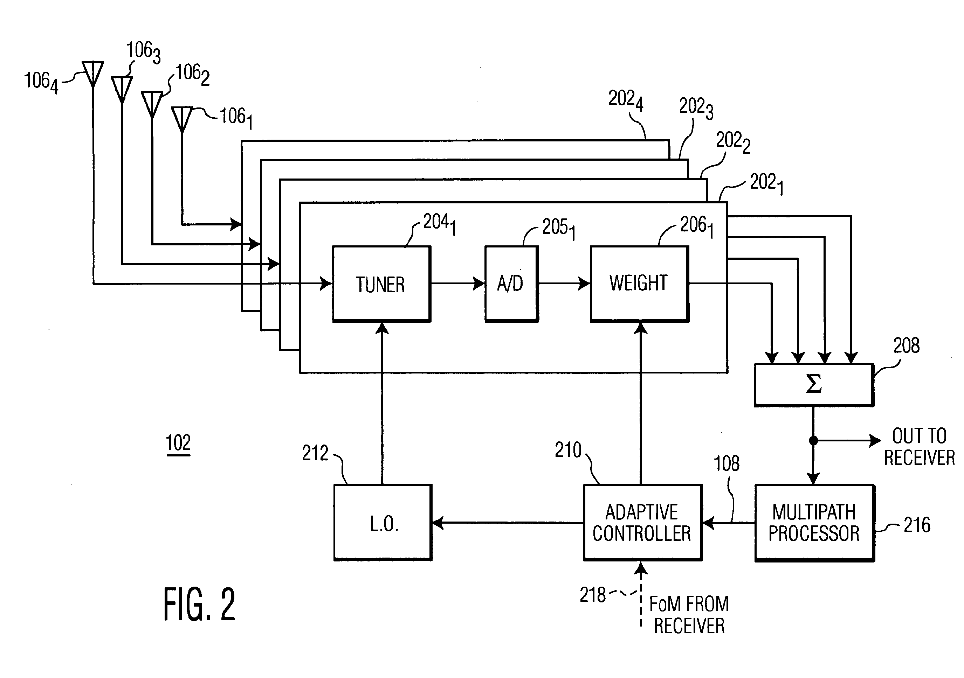

FIG. 2 depicts a block diagram of one embodiment of an adaptive combiner 102. The adaptive combiner 102 comprises a plurality of tuning modules 202, a summer 208, a multipath processor 216, an adaptive controller 210, and a local oscillator (LO) 212. Each of the plurality of tuning modules 202 comprises a tuner 204 and a weight 206. Each of the plurality of antenna elements 106 is coupled to a respective one of the plurality of tuning modules 202. Specifically, with respect to tuning module 202₁, the spatially unique replica of the desired television signal generated by antenna element 106₁ is coupled to the tuner 204₁. The tuner 204₁ outputs an intermediate frequency (IF) signal corresponding to the desired television signal. The desired television signal is determined by the LO 212, which generates a LO signal having the appropriate frequency. The resulting IF signal is weighted by the weight 206₁ and coupled to the summer 208. It should be recognized that the signal may be digitized (using digitizer 205₁) at the output of the tuner, so that the adaptive processing may be performed mathematically.

Each of the plurality of tuning modules 202 operates in accordance with the above description causing a plurality of weighted spatially unique replicas of the desired television signal to be coupled to the summer 208. The summer 208 combines the plurality of weighted replicas to generate a spatially combined television signal. The spatially combined television signal is coupled to the television receiver 104 for demodulation and display of the television information as shown in FIG. 1. The format of the output from the combiner is chosen to be compatible with the receiver equipment. For example, the signal may be converted to the same frequency and modulation as originally sought by the TV. Alternatively it may be left as-is for a TV receiver that is appropriately configured.

The adaptive combiner 102 reduces multipath distortion in the desired television signal by appropriately adjusting each of the weights 206. Each weight 206 both adjusts the amplitude, and delays in time, the IF signal associated with the respective spatially unique replica of the desired television signal. Those skilled in the art could readily devise other forms for the weights, including, but not limited to, weighting both amplitude and phase, weighting amplitude only, weighting phase only, and performing a time delay only. One can also perform the weighting function directly on the RF signal, as is more typical of phased array antennas well known in the art. The choice is a matter of convenience in the chosen method of implementing the weights.

The adaptive controller 210 determines the value of each weight (i.e., the amount of amplification or attenuation and the amount of time delay) pursuant to an adaptive algorithm. In one embodiment of the invention, the adaptive algorithm utilizes a cross-correlation matrix that has the plurality of spatially unique replicas of the desired television signal as input. Specifically, the adaptive controller 210 selects a spatially unique replica, for example the replica generated by antenna element 106₁, and computes a cross-correlation matrix between the selected replica and the remaining spatially unique replicas. Upon the determination that the desired television signal contains a multipath component, the adaptive controller 210 adjusts, for example, the weight 206₂ corresponding to the spatially unique replica generated by antenna member 106₂. The weight 206₂ is adjusted so as to temporally align its respective spatially unique replica with the selected replica and to invert the detected multipath component. It should be recognized that the temporal delay need not be valued at the full measure of the delay between the direct and ghosted signals, but that essentially the same performance may be achieved by a delay period of the appropriate fraction of one RF period. This method, combined with a broadband inverter function (mathematical in the digital case or analog otherwise) will provide equally effective nulling in the direction of unwanted signals without the expense of the long tapped delay lines that would be required to capture the full delay time of the ghosted signal. This fact is one of the significant advantages of the present system versus an approach based solely on equalization, wherein full time delay is an absolute requirement.

When the summer 208 combines the two replicas, the multipath component is canceled from the desired television signal. In this manner, the adaptive controller 210 is able to cancel two more multipath components (for a total of three in the present embodiment) utilizing the spatially unique replicas from antenna members 106₃ and 106₄. In general, the apparatus 100 is able to cancel a number of multipath components which is one less than the number of antenna elements 106 (i.e., one less than the number of degrees of freedom). A larger number of multipath components may be addressed, with some compromise, by a least mean squares minimization of the total multipath energy. Those skilled in the art may readily devise other schemes for optimal weighting.

Alternatively, the performance at the combiner output may be used to derive a net figure of merit. In this case the adaptive process must blindly gravitate toward an optimat solution by gradient search-type algorithms well known in the literature.

The multipath processor 216 is coupled to the output of the summer 208 for analyzing the spatially combined signal to generate the FoM. The FoM depends upon the type of the signal being received (i.e., analog or digital). For NTSC signals, the FoM is based on an examination of various synchronous signals associated with the standard broadcast format. For digital signals, the multipath processor 216 calculates the signal-to-noise ratio. The FoM is output to the adaptive controller 210. In an alternative embodiment of the invention, the FoM could be derived from the receiver electronics according to a standardized protocol for such systems as shown by signal path 218.

In a lower cost alternative embodiment, the adaptive combiner 102 is reduced to a selector switch, which simply selects one of the available antenna ports for reception, while terminating the other ports with matched loads. The port selection process of such an embodiment could be based either on the same FoM as in the fully adaptive implementation, or simply on a memory look-up table of pre-arranged values selected by the user during a previous set-up mode of operation. Such a low-cost system lacks the gain and nulling performance of the fully adaptive system, but still provides substantially improved performance in the urban environment versus a simple static antenna.

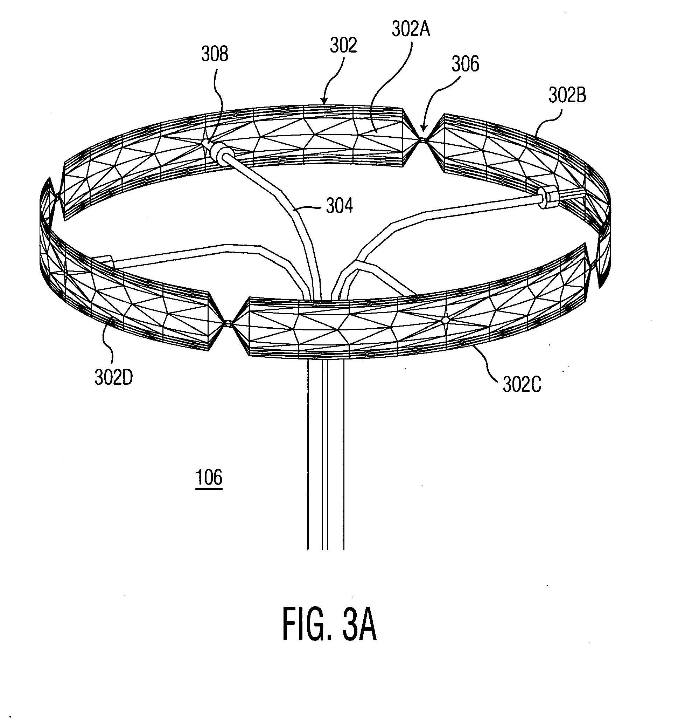

FIG. 3A shows a perspective view of an illustrative antenna 300 in accordance with the present invention. The antenna 300 is a multi-port loop antenna that is particularly well suited for use in an urban environment where signal strength is of less concern than multipath distortion. In one embodiment, the antenna 300 is a four-port loop antenna comprising a loop 302 formed from four flat strip conductors 302A, 302B, 302C, and 302D having four feed ports 306, and four feed lines 304 coupled to the loop 302 via mechanical couplers 308. The loop 302 has a circular cross-section and the feed ports 306 are disposed at 90° intervals on the perimeter of the loop 302. Each feed line 304 is mechanically coupled to the loop 302 midway between a respective pair of feed ports 306. The feed lines 304 extend radially inward from, and substantially to the center of, the loop 302. At the center of the loop 302, the feed lines 304 bend 90° at point 310 and extend away from the loop 302. The structure of the antenna 300 provides a convenient geometry for a supporting shell structure, making the design viable for set-top use.

The loop 302 is formed of foil, sheet metal, printed circuit board, or any combination thereof. In one embodiment, the loop comprises a conductive layer deposited upon, or otherwise attached to, a dielectric substrate 302S. The layer forms each of the conductive strips 302A, 302B, 302C, and 302D. Although FIG. 3A shows the loop 302 having a circular cross-section, those skilled in the art could readily devise alternative cross-sections. Furthermore, the loop may not be formed as a wide strip; however, the wide strip is practical and provides a substantially constant impedance over the broadcast frequency range. In another embodiment of the invention, the width of the strip conductor may also be oriented in the plane of the loop, as in an annulus.

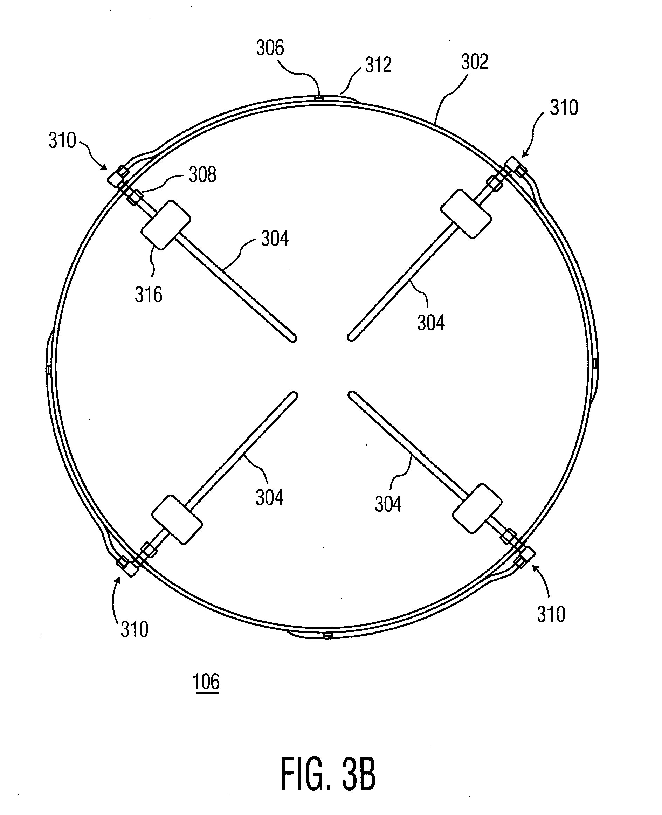

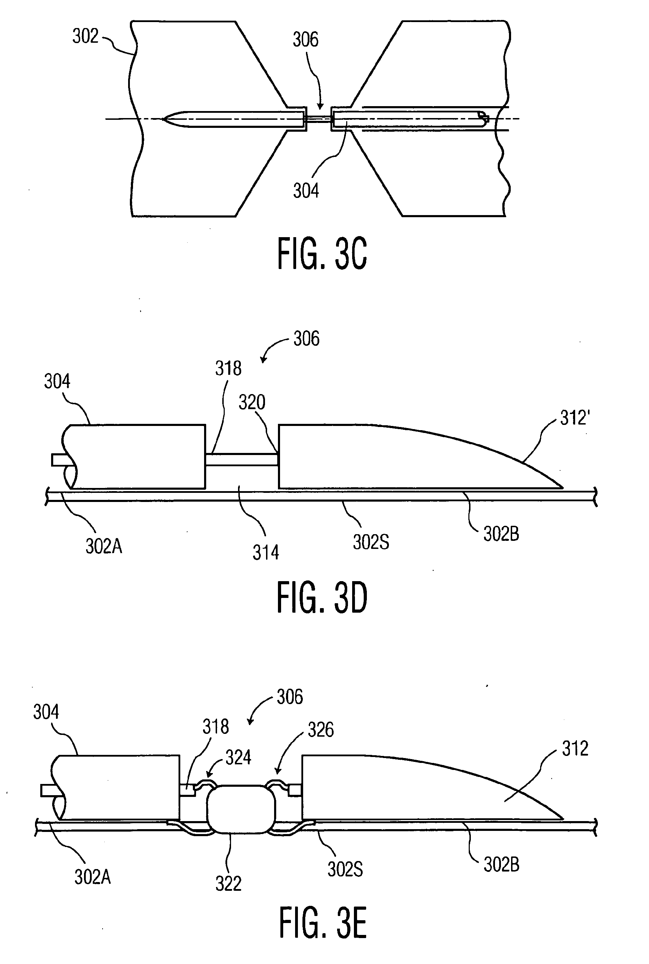

FIG. 3B shows the top view of the antenna 300. Each feed line 306 bends 90° (at point 310) after the mechanical coupler 308 and extends along the perimeter of the loop 302. The coax shield of each feed line 306 is terminated on one side of a respective feed port 306 while the coax center conductor crosses the feed port 306 and joins a geometrically symmetric dummy coax structure 312 on the other side. FIG. 3C shows a close-up, side view of the structure of a feed port 306 and FIG. 3D shows a close-up, top view of the feed port 306. In the depicted embodiment, the loop 302 comprises a conductive layer 302A and 302B deposited upon an outer surface of a substrate 302S. The conductive strips 302A, 302B, 302C, and 302D are made narrow at each feed port 306 and a gap 314 (no conductor present) is formed between the conductive strips 302A, 302B of the loop 302 at the feed port 306. The feed lines 304 are coaxial cables, the shield of which is grounded to the loop 302 at the point where the feed line 304 is mechanically coupled to the conductive layer 302A of the loop 302. The narrow portion of the loop reduces stray reactance at those points, whereas the wider sections of the loop draw current away from the coaxial cables connections thereby reducing coupling to the feed lines 304. The increased width also acts to reduce the intrinsic reactance of the strip itself, thereby stabilizing the input impedance with respect to frequency. A width of at least two centimeters is needed to realize this effect. Alternatively a circular cross section conductor may be used, such as a wire or tube, with an outer diameter of at least one centimeter to achieve the desired stable impedance. As mentioned above, at each feed port 306, the center conductor 318 of the coaxial cable 304 spans the gap 314 and is grounded on the opposing side 320 of the gap 314 via the dummy coax 312. The coaxial cable 304 and dummy coax structure 312 form a self-balun.

Ferrite beads or sleeves 316 may be optionally placed around each feed line 304 to reduce coupling directly into the coaxial cables and reduce parasitic radiation by the coaxial cables.

As shown in FIG. 3E, impedance matching transformers 322 may be placed at the feed ports 306, or at other points in the circuit, for improved matching to the tuner. Specifically, the matching transformer 322 has input terminals 324 coupled to the coaxial cable center conductor 318 and conductive strip 302A and has output terminals 326 coupled to the dummy coax structure 312 and the conductive strip 302B.

In an alternative embodiment of the invention, the transformer 322 is inserted at the mechanical coupler point. Thus the coax grounded the surface of the loop is replaced by a wire line which acts in conjunction with the conducting surface in the manner of a standard twin-lead transmission line wherein the strip conducting surface is situated on the plane of symmetry of such a line.

An alternative feed configuration for the antenna comprises a 300-ohm twin-lead transmission lines connected directly to the loop ports. The twin-leads would connect to in-line baluns at the hub of the loop. A classical Beverage antenna may be configured in this manner such that when the Beverage antenna is rotated to point directly at the signal source, the antennas single feed line would be oriented end-on to the incident field. As such, there would be little or no coupling to the feed line itself.

In another alternative feed structure, the transformer 322 can be positioned "in-line" at a location away from the feed point 306. As such, each of the coaxial cables 304 would terminate at a transformer 322 located, for example, at the bend point 310. Each transformer would be enclosed in a shielded housing. A high impedance coaxial cable (e.g., 300 ohms) would be used as the transmission line from the transformer to the feed point 306.

The antenna structure described in FIG. 3 is illustrative of that which can be used for the plurality of antenna members 106 as shown and described in FIGs. 1 and 2. Those skilled in the art could readily devise alternative arrangements of multiple antenna elements and/or multiport antennas. The multi-port loop antenna as herein described is particularly appropriate for use in urban environments where high gain is not as important as control of multipath distortion. Arrays of specifically targeted high gain elements, such as Yagi-Uda or log-periodic elements, can be used where more gain is required.

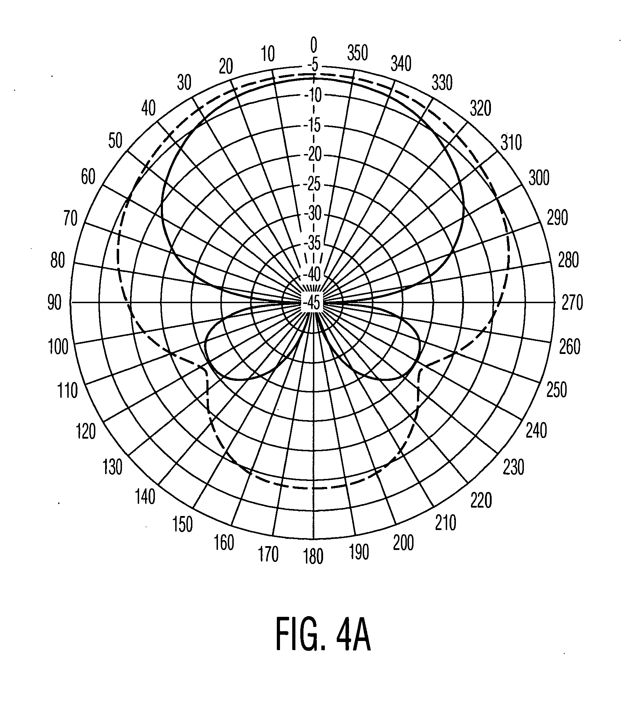

FIG. 4A depicts an illustrative radiation pattern obtained by the apparatus 100 of the present invention for low frequencies. The direction of the desired television signal is 0° and the directions of the multipath components are 90°, 180°, and 270°. In this example, the apparatus 100 forms pattern nulls at the multipath incident angles while maintaining gain in the desired signal direction.

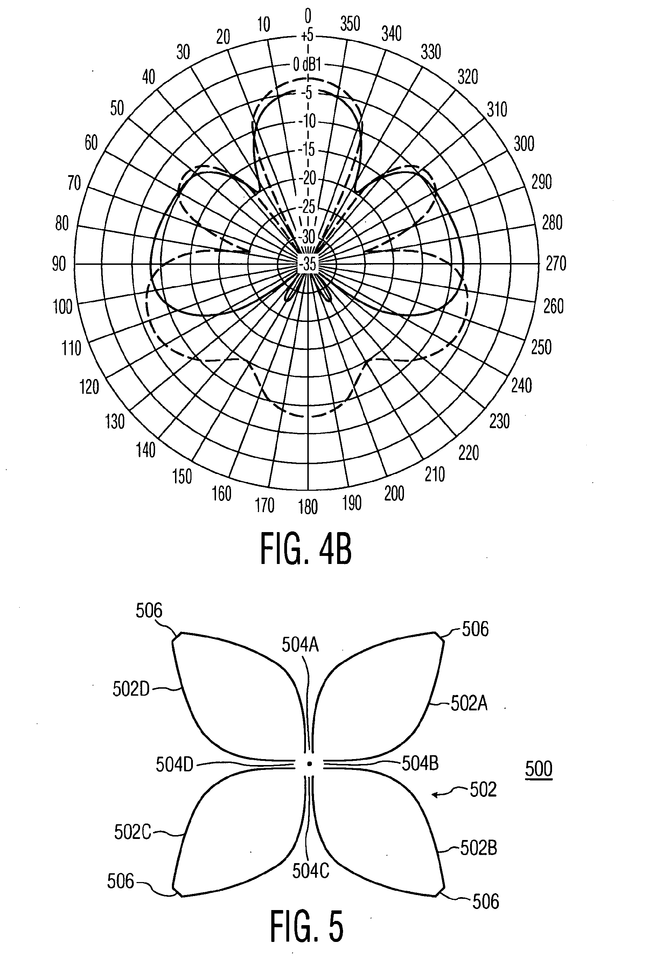

FIG. 4B depicts an illustrative radiation pattern obtained by the apparatus 100 of the present invention for high frequencies. Again, the direction of the desired signal is 0° but the directions of the multipath components are now 135°, 180°, and 225°. The apparatus 100 forms pattern nulls at the multipath incident angles while maintaining gain in the desired signal direction. For higher frequencies, the main lobe of the pattern becomes more directional than for lower frequencies.

FIG. 5 depicts an alternative design of the antenna 500. The antenna 500 is a clover antenna comprised of a loop fo2 having four Vivaldi flared-notch antennas 502A, 502B, 502C, and 502D facing orthogonal directions. The loop 502, as a whole, operates in the VHF band as a modified, Beverage antenna, while the Vivaldi elements 502A, 502B, 502C, and 502D provide directional patterns in the UHF band. The elements may have a wider conductor along the flares to support the currents known to flow on the surface adjacent to the actual aperture on standard Vivaldi antennas.

As with the previous embodiment of the antenna, this alternative design may be forms of wire, tubing, printed circuit board trace, foil, thin metal, and the like. The four-antenna element arrangement allows for selecting a particular antenna pattern. The pattern is selected by selecting a particular antenna port 504A, 504B, 504C or 504D. Each port provides a reception signal with unique amplitude and phase characteristics. Additional antenna patterns that are pointed at intermediate angles are possible by coupling the multiple antenna ports into a combining and phasing network.

The four Vivaldi elements 502A, 502B, 502C and 502D can be isolated from one another when not used in a loop configuration for VHF signal reception. Such isolation provides improved UHF pattern performance. The isolation can be provided by using mechanical relays, PIN diode switches, or a frequency selective circuit network between Vivaldi antenna element edges (e.g., at locations 506).

Although various embodiments which incorporate the teachings of the present invention have been shown and described in detail herein, those skilled in the art can readily devise many other varied embodiments that still incorporate these teachings.

## Claims

1. A loop antenna comprising
(a) a plurality of conductor elements (302) arranged in combination to form a loop,
(a1) wherein each conductor element has two opposite side portions, each side portion located adjacent a corresponding side portion of a neighbouring conductor element to define a gap (314) between said adjacent side portions,
(a2) each said gap defining a feed port (306) of said loop antenna, thus providing a plurality of feed ports corresponding to the plurality of conductor elements,
(a3) wherein said side portions of each said conductor element, at said gaps, have a narrower cross-section transverse to the perimeter of the loop than the remaining portions of the conductor element;
(b) a plurality of feed lines (304) each associated with a respective one of said plurality of conductor elements (302) and uniquely associated with one of the feed ports (306) at one side portion of the associated conductor element,
**characterized in that**
(b1) each feed line is mechanically coupled (308) to its associated conductor element substantially midway between the feed ports (306) at the side portions of said conductor element,
(b2) each feed line extends along its associated conductor element and is terminated at its uniquely associated feed port (306) by first signal coupling means.

2. The loop antenna of claim 1, wherein each said conductor element is a conductive strip.

3. The loop antenna of any of claims 1 and 2, wherein each said feed line is formed as the centre conductor of a first coaxial cable and wherein said first signal coupling means is formed by the cable's shield conductor being coupled to the associated conductor element and by the centre conductor spanning the gap at the associated feed port and being coupled to the adjacent conductor element at the opposite side of the gap.

4. The loop antenna of claim 3 wherein said first signal coupling means comprises a further coaxial cable which is formed on said adjacent conductor element and has its inner conductor coupled to said feed line.

5. The loop antenna of any of claims 1-4, wherein said first signal coupling means comprises an impedance matching transformer.

6. The loop antenna of any of claims 1-5, wherein said conductive elements (302) are formed upon a circular substrate.

## Patentansprüche

1. Schleifenantenne, die umfasst:
(a) mehrere Leiterelemente (302), die gemeinsam so angeordnet sind, dass sie eine Schleife bilden,
(a1) wobei jedes Leiterelement zwei gegenüberliegende Seitenabschnitte aufweist, wobei jeder Seitenabschnitt angrenzend an einen entsprechenden Seitenabschnitt eines benachbarten Leiterelements angeordnet ist, um zwischen den angrenzenden Seitenabschnitten einen Zwischenraum (314) zu definieren,
(a2) wobei jeder Zwischenraum einen Speiseanschluss (306) der Schleifenantenne definiert, sodass mehrere Speiseanschlüsse vorgesehen sind, die den mehreren Leiterelementen entsprechen,
(a3) wobei die Seitenabschnitte jedes Leiterelements an den Zwischenräumen quer zum Durchmesser der Schleife einen schmaleren Querschnitt als die restlichen Abschnitte des Leiterelements aufweisen;
(b) mehrere Speiseleitungen (304), die jeweils einem jeweiligen der mehreren Leiterelemente (302) zugeordnet sind und an einem Seitenabschnitt des zugeordneten Leiterelements eindeutig einem der Speiseanschlüsse (306) zugeordnet sind,
**dadurch gekennzeichnet, dass**
(b1) jede Speiseleitung an den Seitenabschnitten des Leiterelements im Wesentlichen in der Mitte zwischen den Speiseanschlüssen (306) mechanisch mit ihrem zugeordneten Leiterelement gekoppelt ist (308),
(b2) jede Speiseleitung entlang ihres zugeordneten Leiterelements verläuft und an ihrem eindeutig zugeordneten Speiseanschluss (306) durch ein erstes Signalkopplungsmittel abgeschlossen ist.

2. Schleifenantenne gemäß Anspruch 1, bei der jedes Leiterelement ein leitfähiger Streifen ist.

3. Schleifenantenne gemäß einem der Ansprüche 1 und 2, bei der jede Speiseleitung als der Mittelleiter eines ersten Koaxialkabels gebildet ist und bei der das erste Signalkopplungsmittel durch den Abschirmleiter des Kabels, der mit dem zugeordneten Leiterelement gekoppelt ist, und durch den Mittelleiter, der den Zwischenraum bei dem zugeordneten Speiseanschluss überspannt und der an der gegenüberliegenden Seite des Zwischenraums mit dem angrenzenden Leiterelement gekoppelt ist, gebildet ist.

4. Schleifenantenne gemäß Anspruch 3, bei der das erste Signalkopplungsmittel ein weiteres Koaxialkabel umfasst, das an dem angrenzenden Leiterelement gebildet ist und dessen Innenleiter mit der Speiseleitung gekoppelt ist.

5. Schleifenantenne gemäß einem der Ansprüche 1-4, bei der das erste Signalkopplungsmittel einen Impedanzanpassungstransformator umfasst.

6. Schleifenantenne gemäß einem der Ansprüche 1-5, bei der die leitfähigen Elemente (302) auf einem kreisförmigen Substrat gebildet sind.

## Revendications

1. Antenne en boucle comprenant
(a) une pluralité d'éléments conducteurs (302) agencés en combinaison afin de former une boucle,
(a1) où chaque élément conducteur possède deux parties latérales opposées, chaque partie latérale située de façon adjacente par rapport à une partie latérale correspondante d'un élément conducteur avoisinant afin de définir un intervalle (314) entre lesdites parties latérales adjacentes,
(a2) chacun desdits intervalles définissant un bras d'excitation (306) de ladite antenne en boucle, fournissant ainsi une pluralité de bras d'excitation correspondant à la pluralité d'éléments conducteurs,
(a3) où lesdites parties latérales de chacun desdits éléments conducteurs, au niveau desdits intervalles, possèdent une coupe transversale au périmètre de la boucle plus étroite que les parties restantes de l'élément conducteur ;
(b) une pluralité de lignes d'alimentation (304), chacune associée à un élément respectif de ladite pluralité d'éléments conducteurs (302) et uniquement associée à un des bras d'excitation (306) au niveau d'une partie latérale de l'élément conducteur associé,
**caractérisé en ce que**
(b1) chaque ligne d'alimentation est couplée de façon mécanique (308) à son élément conducteur associé quasiment à mi-chemin entre les bras d'excitation (306) au niveau des parties latérales de chaque élément conducteur,
(b2) chaque ligne d'alimentation s'étend le long de son élément conducteur associé et est terminée au niveau de son bras d'excitation (306) uniquement associé par un premier moyen de couplage de signal.

2. Antenne en boucle selon la revendication 1, où chacun desdits éléments conducteurs est une bande conductrice.

3. Antenne en boucle selon une quelconque des revendications 1 et 2, où chacune desdites lignes d'alimentation est formée en tant que conducteur central d'un premier câble coaxial et où ledit premier moyen de couplage de signal est formé par le conducteur blindé du câble, couplé à l'élément conducteur associé et par le conducteur central s'étendant sur l'intervalle au niveau du bras d'excitation associé et couplé à l'élément conducteur adjacent au niveau du côté opposé de l'intervalle.

4. Antenne en boucle selon la revendication 3, où ledit premier moyen de couplage de signal comprend un câble coaxial supplémentaire formé sur ledit élément conducteur adjacent et a son conducteur intérieur couplé à ladite ligne d'alimentation.

5. Antenne en boucle selon une quelconque des revendications 1 à 4, où ledit premier moyen de couplage de signal comprend un transformateur d'adaptation d'impédance.

6. Antenne en boucle selon une quelconque des revendications 1 à 5, où lesdits éléments conducteurs (302) sont formés sur un substrat circulaire.
